# EUROPEAN PATENT SPECIFICATION

(11) **EP 4 123 359 B1**
(45) Date of publication and mention of the grant of the patent: **11.03.2026**
(21) Application number: 21772002.8
(22) Date of filing: 24.02.2021
(51) Int. Cl.: G02B 27/01

(54) **OPTICAL SYSTEM AND NEAR-EYE DISPLAY DEVICE**
OPTISCHES SYSTEM UND NAHFELD-ANZEIGEVORRICHTUNG
SYSTÈME OPTIQUE ET DISPOSITIF D'AFFICHAGE PROCHE DE L'OEIL

(30) Priority: 20.03.2020 CN 202010202147
(43) Date of publication of application: 25.01.2023
(73) Proprietor: Nokia Technologies Oy, 02610 Espoo (FI)
(72) Inventor: TANG, Weiping, Dongguan, Guangdong 523863 (CN)
(74) Representative: Nokia EPO representatives
(86) International application number: PCT/CN2021/077595
(87) International publication number: WO 2021/185033

(56) References cited:
- WO-A1-95/21391
- CN-A- 107 589 546
- CN-A- 107 589 546
- CN-A- 108 681 073
- CN-A- 110 618 529
- CN-A- 111 221 130
- CN-U- 209 542 958
- CN-U- 209 542 958
- JP-A- 2002 122 806
- US-A1- 2009 323 024

## Description

### TECHNICAL FIELD

The present disclosure relates to the field of display technologies, and in particular, to an optical system and a near-eye display device.

### BACKGROUND

With the popularization of smart devices, near-eye display (Near-eye Displays, NED) devices such as augmented reality (Augmented Reality, AR) devices gradually enter the consumption field. For ease of design, a current near-eye display device generally uses a Birdbath optical system. That is, natural light emitted by a display source is projected to a beam splitter. A part of light is reflected by the beam splitter, transmitted to a partial transmitting and partial reflecting mirror, then is reflected by the partial transmitting and partial reflecting mirror to be transmitted to the beam splitter, and passes through the beam splitter to reach human eyes to form a virtual image. Another part of the light directly reaches the human eyes through the beam splitter. This part of the light cannot be imaged and therefore becomes stray light. As a result, the display effect of the near-eye display device is affected.

WO1995021391A1 relates to visual displays which combine generated images with the view of the environment surrounding a user and transmit such combined visual information to the eye position of the user. A fold mirror (1) frequently utilized in such displays reflects only a fraction of the light striking it and, similarly, transmits only a different fraction of the light reaching it. The fold mirror (1) will reflect a maximum amount of light when such light is S polarized and transmit a maximum amount of light when the light is P polarized. If the image generator produces S polarized light, one quarter-wave plate (3) is used to assure that image light to be reflected by the fold mirror (1) is S polarized while image light to be transmitted through the fold mirror (1) is P polarized. If the image generator produces P polarized light, a first quarter-wave plate (31) and a second quarter-wave plate (32) are employed.

CN107589546A relates to an optical system and augmented reality glasses. The optical system comprises a first optical structure, a second optical structure and a third optical structure that are matched with each other, wherein polarized light of a first type is separated from outgoing light rays of an augmented reality glass light source via the first optical structure, the polarized light of the first type is synthesized into polarized light of a third type via the second optical structure, the polarized light is synthesized into polarized light of a second type via the second optical structure after being reflected via the third optical structure, the polarized light of the second type is then emitted out via the first optical structure, the polarized light of the second type is separated from ambient light rays via the first optical structure after the ambient light rays are transmitted through the third optical structure and the second optical structure, the polarized light of the second type is emitted out via the first optical structure, and the polarized light of the second type and the polarized light of the first type are linearly polarized light perpendicular to polarization direction.

CN108681073A relates to an augmented reality optical display system. The augmented reality optical display system comprises a light source, a first optical structure, a second optical structure, a third optical structure and a fourth optical structure, wherein the first optical structure is used for carrying out field curvature correction and distortion processing of light of a light source image, the second optical structure is used for converting the incident light into the circularly polarized light, reflecting the circularly polarized light to the third optical structure and transmitting the received second reflected light to human eyes, the third optical structure is used for receiving the circularly polarized light, reflecting the second reflected light to the second optical structure and transmitting the leaked light to the fourth optical structure, and the fourth optical structure is used for absorbing the leaked light and avoiding privacy exposure problems of the viewing content of users.

CN209542958U relates to the technical field of augmented reality, and specifically relates to an anti-interference augmented reality display system and AR glasses. According to the anti-interference augmented reality display system and the AR glasses, through integration and design of the image display, the light path turning plane element, the phase delay sheet, the reflection amplification element and the polarization absorption element, the first external environment light in the first linear polarization direction in the first external environment light is absorbed by the polarization absorption element and cannot be received by human eyes; and the first external environment light in the second linear polarization direction in the first external environment light penetrates through the polarization absorption element and the light path turning plane element, and even if the first external environment light is reflected by the image display, the reflected first external environment light in the second linear polarization direction can also penetrate through the polarization absorption element and the light path turning plane element and cannot enter human eyes.

### SUMMARY

Embodiments of the present disclosure provide an optical system and a near-eye display device, which can eliminate stray light generated in the near-eye display device and therefore improve the display effect of the near-eye display device.

The invention is set out in the appended set of claims.

In the embodiments of the present disclosure, the optical system uses the light conversion unit that is on the light-exiting surface of the light-emitting source, so that the first light emitted by the light-emitting source can be converted into the second light. In addition, the optical system uses the first reflection unit that is on the side of the light conversion unit away from the light-emitting source, and the angle between the second surface of the first reflection unit and the first surface of the light conversion unit is the first angle, so that the second light converted by the light conversion unit can be reflected outside, to prevent the second light from directly passing through the first reflection unit and reach human eyes to form stray light, thereby improving the display effect of the near-eye display device and user experience.

### BRIEF DESCRIPTION OF THE DRAWINGS

Accompanying drawings described herein are used for providing further understanding about the present disclosure, and constitute one portion of the present disclosure. Exemplary embodiments of the present disclosure and descriptions thereof are used for explaining the present disclosure, and do not constitute an inappropriate limitation on the present disclosure. In the accompanying drawings:
FIG. 1 is a schematic structural diagram of a current optical system;
FIG. 2 is a schematic structural diagram of an optical system according to an embodiment of the present disclosure; and
FIG. 3 is a schematic structural diagram of another optical system according to an embodiment of the present disclosure.

### DETAILED DESCRIPTION

The following clearly and completely describes the technical solutions in embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

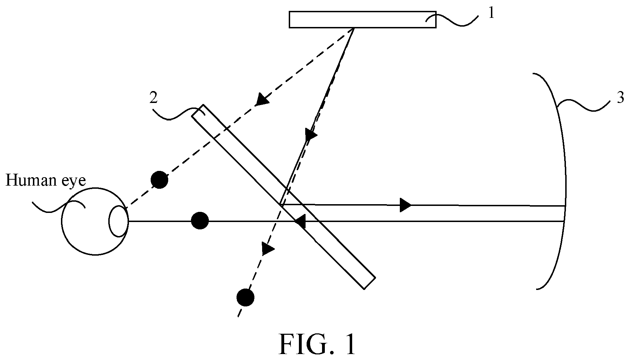

With the popularization of smart devices, near-eye display devices such as AR devices gradually enter the consumption field. For ease of production, a current near-eye display device generally uses a Birdbath optical system. As shown in FIG. 1, natural light emitted by a display source 1 is projected to a beam splitter 2. A part of light (for example, solid lines in FIG. 1) is reflected by the beam splitter 2, transmitted to a partial transmitting and reflecting mirror 3, then is reflected by the partial transmitting and reflecting mirror 3 to be transmitted to the beam splitter 2, and is transmitted through the beam splitter 2 to reach human eyes to form a virtual image. Another part of the light (for example, dashed lines in FIG. 1) directly reaches the human eyes through the beam splitter 2. This part of the light cannot be imaged and therefore becomes stray light, and as a result the imaging quality of the near-eye display device is affected. Black dots in the figure indicate that vibration directions are perpendicular to a paper surface.

In a view of this, the embodiments of the present disclosure provide an optical system and a near-eye display device, to resolve the foregoing problems in a current near-eye display device.

The technical solutions provided in the embodiments of the present disclosure are described in detail below with reference to the accompanying drawings.

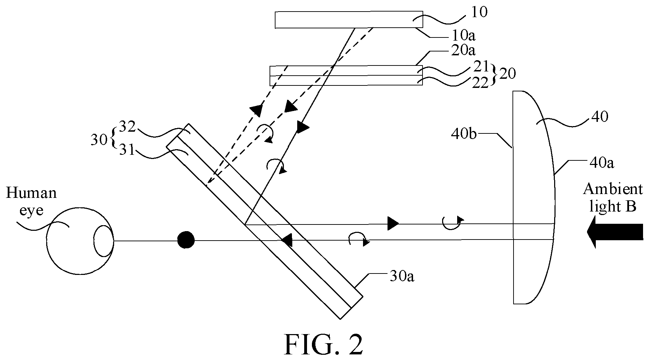

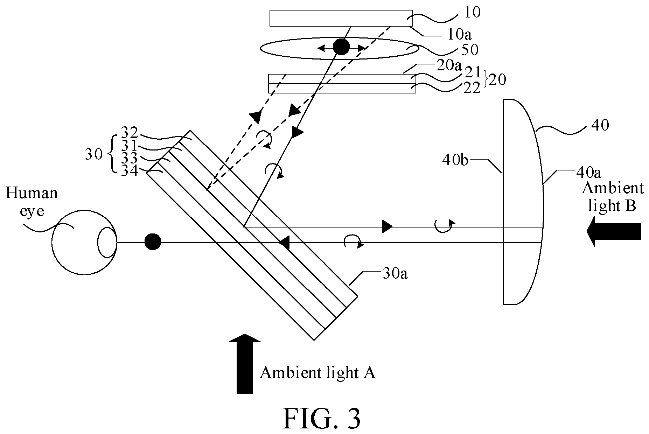

Referring to FIG. 2 and FIG. 3, the embodiments of the present disclosure provide an optical system. The optical system may be used in a near-eye display device such as an AR device. The optical system may include a light-emitting source 10, a light conversion unit 20, and a first reflection unit 30.

The light conversion unit 20 is on a light-exiting surface of the light-emitting source 10, and a first surface 20a of the light conversion unit 20 faces a light-exiting surface 10a of the light-emitting source 10. The first reflection unit 30 is on a side of the light conversion unit 20 away from the light-emitting source 10, and an angle between a second surface 30a of the first reflection unit 30 and the first surface 20a of the light conversion unit 20 is a first angle.

In the optical system provided in the embodiments of the present disclosure, a first light (for example, dashed lines shown in the figures) emitted by the light-emitting source 10 is converted by the light conversion unit 20 into a second light, and the second light is reflected by the first reflection unit 30, so that the first light emitted by the light-emitting source 10 is prevented from directly reaching human eyes through the first reflection unit 30.

During application, a reflecting surface 40a of a reflecting lens 40 on a near-eye display device (such as AR glasses) faces the second surface 30a of the first reflection unit 30. Another part of the light (for example, solid lines shown in the figures) emitted by the light-emitting source 10 is converted by the light conversion unit 20, and a vibration direction of this part of the light is changed (for example, this part of the light is converted from natural light to circularly polarized light or elliptically polarized light). This part of the light is transmitted to the first reflection unit 30, reflected by the first reflection unit 30 to the reflecting surface 40a of the reflecting lens 40, then reflected by the reflecting surface 40a to the first reflection unit 30 and passes through the first reflection unit 30 to reach the human eyes, to form a virtual image.

It may be understood that since the first light emitted by the light-emitting source 10 is prevented from directly reaching human eyes, the imaging quality of the virtual image formed by another part of the light is not affected, so that the display effect of the near-eye display device and user experience can be improved.

Optionally, in the optical system provided in the embodiments of the present disclosure, the first angle between the first surface 20a of the light conversion unit 20 and the second surface 30a of the first reflection unit 30 is not less than 30 degrees and not greater than 60 degrees. Therefore, light projected by the light conversion unit 20 can be projected to the first reflection unit 30 and then reflected at an appropriate angle, thereby further eliminating stray light.

It should be noted that in the optical system provided in the embodiments of the present disclosure, the first angle between the first surface 20a and the second surface 30a is not limited to being between 30 degrees and 60 degrees. For example, the first angle may be less than 30 degrees, or the first angle may be greater than 60 degrees. In these cases, the first reflection unit 30 can also reflect the light projected by the light conversion unit 20 to eliminate stray light.

All components in the optical system provided in the embodiments of the present disclosure are described respectively below.

In an optional implementation, the light-emitting source 10 in the optical system provided in the embodiments of the present disclosure may be a liquid crystal display (Liquid Crystal Display, LCD), an organic light-emitting diode (Organic Light-emitting Diode, OLED) display, or a display made of another material, which is not specifically limited herein.

In an optional implementation, the light conversion unit 20 in the optical system provided in the embodiments of the present disclosure may include an absorptive polarizer 21 and a first phase retarder 22. The absorptive polarizer 21 includes the first surface 20a, and the first phase retarder 22 is on a side of the absorptive polarizer 21 away from the light-emitting source 10.

In this implementation, the first light may be natural light, and the second light may be circularly polarized light or elliptically polarized light. The first light emitted by the light-emitting source 10 is converted by the absorptive polarizer 21 into linearly polarized light, and the linearly polarized light is converted by the first phase retarder 22 into the second light. The second light is reflected by the first reflection unit 30, transmitted to the first phase retarder 22 again, and is then converted by the first phase retarder 22 into linearly polarized light, a vibration direction of the linearly polarized light is changed, then the linearly polarized light is absorbed by the absorptive polarizer 21.

It may be understood that the natural light emitted by the light-emitting source 10 may be converted into linearly polarized light by using the absorptive polarizer 21, and a vibration direction of linearly polarized light transmitted from the absorptive polarizer 21 and a vibration direction of the light reflected back from the first reflection unit 30 can be adjusted by using the first phase retarder 22, so that the light reflected back from the first reflection unit 30 can be absorbed by the absorptive polarizer 21. Therefore, the light emitted by the light-emitting source 10 is prevented from reaching human eyes, thereby eliminating stray light and improving the display effect of the near-eye display device.

Optionally, to achieve better imaging quality, a second angle is provided between a transmission axis of the absorptive polarizer 21 and an optical axis of the first phase retarder 22. Optionally, the second angle may be 45 degrees. In this case, the second light converted by the first phase retarder 22 is circularly polarized light, and further obtained imaging quality is good.

Optionally, the second angle may be alternatively any other angle other than 45 degrees. In this case, the second light converted by the first phase retarder 22 is elliptically polarized light. The elliptically polarized light can also be reflected back by the first reflection unit 30 after being transmitted to the first reflection unit 30, and is then converted by the first phase retarder 22 again into linearly polarized light to be absorbed by the absorptive polarizer 21, thereby eliminating stray light.

Optionally, the absorptive polarizer 21 may be adhered to the first phase retarder 22. Therefore, in one aspect, a transmission path of light in the light conversion unit 20 can be shortened to reduce a light loss. In another aspect, the volume of the light conversion unit 20 can be reduced, thereby reducing a space of the optical system.

Correspondingly, the first reflection unit 30 in the optical system provided in the embodiments of the present disclosure may include a reflective polarizer 31 and a second phase retarder 32. The second phase retarder 32 includes the second surface 30a. The second surface 30a faces the light conversion unit 20. The reflective polarizer 31 is on a side of the second phase retarder 32 away from the light conversion unit 20, and a vibration direction of the reflective polarizer 31 is orthogonal to a vibration direction of the absorptive polarizer 21. For example, if the vibration direction of the reflective polarizer 31 is a P direction, the vibration direction of the absorptive polarizer 21 is an S direction. If the vibration direction of the reflective polarizer 31 is the S direction, the vibration direction of the absorptive polarizer 21 is the P direction.

In this implementation, the second light converted and projected by the light conversion unit 20 is converted by the second phase retarder 32 into a third light. The third light is reflected by the reflective polarizer 31 to the second phase retarder 32 and converted by the second phase retarder 32 into a fourth light to be transmitted to the first phase retarder 22. The fourth light is converted by the first phase retarder 22 into a fifth light. The fifth light is absorbed by the absorptive polarizer 21.

For example, the first light may be natural light, the second light may be circularly polarized light, the third light may be linearly polarized light, the fourth light may be circularly polarized light, and the fifth light may be linearly polarized light, where a vibration direction of the third light is orthogonal to a vibration direction of the fifth light. For example, if the third light is P-polarized light, the fifth light is S-polarized light. If the third light is S-polarized light, the fifth light is P-polarized light.

It may be understood that in this implementation, by using the reflective polarizer 31 with a vibration direction orthogonal to the vibration direction of the absorptive polarizer 21, the reflective polarizer 31 can reflect linearly polarized light transmitted from the absorptive polarizer 21. Through the cooperation between the second phase retarder 32 and the first phase retarder 22, a vibration direction of the linearly polarized light transmitted from the absorptive polarizer 21 can be adjusted, so that the linearly polarized light can be reflected by the reflective polarizer 31, and a vibration direction of linearly polarized light reflected by the reflective polarizer 31 to return to the absorptive polarizer 21 can also be adjusted, so that the linearly polarized light can be absorbed by the absorptive polarizer 21. Therefore, light emitted by the light-emitting source 10 is prevented from reaching human eyes, thereby eliminating stray light and improving the display effect of the near-eye display device.

Optionally, both the first phase retarder 22 and the second phase retarder 32 may be quarter-wave plates. When a quarter-wave plate is used as a phase retarder, the cost is low, the implementation is simple, and the assembly is easy.

Optionally, to achieve better imaging quality, a third angle is provided between a transmission axis of the reflective polarizer 31 and an optical axis of the second phase retarder 32. Optionally, the third angle may be 45 degrees. In this case, both the third light and the fourth light converted by the second phase retarder 32 are circularly polarized light, and further obtained imaging quality is good.

Optionally, the third angle may be alternatively any other angle other than 45 degrees. In this case, both the third light and the fourth light converted by the second phase retarder32 are elliptically polarized light, which can also achieve the effect of absorbing stray light.

Optionally, as shown in FIG. 3, the first reflection unit 30 may further include an absorptive polarizer 33 (to facilitate distinguishing from the absorptive polarizer 21 in the light conversion unit 20, the absorptive polarizer 21 is referred to as a first absorptive polarizer, and the absorptive polarizer 33 is referred to as a second absorptive polarizer). The absorptive polarizer 33 may be on a side of the reflective polarizer 31 away from the light conversion unit 20, and a vibration direction of the absorptive polarizer 33 is the same as the vibration direction of the reflective polarizer 31.

For example, when an environment in which the optical system is in has ambient light A that is transmitted to the first reflection unit 30 from a side of human eyes, the absorptive polarizer 33 can absorb all light with vibration directions different from the vibration direction of the absorptive polarizer 33 from the ambient light A. Therefore, polarized light that is in the ambient light A and has a vibration direction orthogonal to the vibration direction of the reflective polarizer 31 can be prevented from being reflected by the reflective polarizer 31 to the human eyes to form stray light and cause visual interference, and polarized light transmitted from the reflective polarizer 31 can be directly transmitted from the absorptive polarizer 33 to reach the human eyes, so that imaging is not affected.

Optionally, the reflective polarizer 31, the second phase retarder 32, and the absorptive polarizer 33 are adhered to each other. Therefore, in one aspect, a transmission path of light in the first reflection unit 30 can be shortened to reduce a light loss. In another aspect, the volume of the first reflection unit 30 can also be reduced, thereby further reducing the space of the optical system.

Further, as shown in FIG. 3, the first reflection unit 30 may further include plate glass 34, and the absorptive polarizer 33 is adhered to the plate glass 34. Therefore, aberration caused by uneven light passing through the first reflection unit 30 caused by wrinkling of any one of the reflective polarizer 31, the second phase retarder 32, and the absorptive polarizer 33 can be avoided, so that the imaging is not affected, thereby further improving the display effect of the near-eye display device.

In another embodiment, the optical system provided in the embodiments of the present disclosure may further include a second reflection unit 40. The second reflection unit 40 is on the side of the light conversion unit 20 away from the light-emitting source 10, and the reflecting surface 40a of the second reflection unit 40 faces the second surface 30a of the first reflection unit 30. In an actual application, the second reflection unit 40 may be used as a reflecting lens of the near-eye display device.

In the second reflection unit 40, a sixth light (for example, the solid lines shown in the figure) emitted by the light-emitting source is converted by the light conversion unit 20 into a seventh light. The seventh light is transmitted to the first reflection unit 30 and converted by the first reflection unit 30 into an eighth light to be reflected to the second reflection unit 40. The eighth light is then reflected by the second reflection unit 40 to the first reflection unit 30 and converted by the first reflection unit 30 into a ninth light to pass through the first reflection unit 30.

For example, the sixth light may be natural light, the seventh light may be circularly polarized light, the eighth light may be linearly polarized light, and a ninth light may be linearly polarized light. A vibration direction of the eighth light is orthogonal to a vibration direction of the ninth light. For example, if the eighth light is S-polarized light, the ninth light is P-polarized light. Alternatively, if the eighth light is P-polarized light, the ninth light is S-polarized light.

It may be understood that the light emitted by the light-emitting source 10 sequentially passes through the light conversion unit 20, the first reflection unit 30, and the second reflection unit 40 to be projected to the first reflection unit 30, and is converted by the first reflection unit 30 to reach human eyes to form a virtual image, thereby implementing near-eye display.

It should be noted that, for an AR device, as shown in FIG. 2 and FIG. 3, the second reflection unit 40 may allow ambient light (such as ambient light B shown in the figures) from a side away from the first reflection unit 30 to pass through. This part of ambient light passes through the second reflection unit 40 to enter the first reflection unit 30, and is converted by the first reflection unit 30 to pass through the first reflection unit 30 to reach the human eyes to form a real image. Therefore, the formed real image and virtual image are combined and augment each other to form augmented reality AR display.

In an optional implementation, the second reflection unit 40 may include a curved lens. A surface 40b of the curved lens facing the first reflection unit 30 is a plane, a surface of the curved lens away from the first reflection unit 30 is a curved surface 40a, and a concave surface of the curved surface 40a may be formed as a reflecting surface. Therefore, a dispersion degree of the curved surface can be reduced, which facilitates more stable reflection and transmission of light in the second reflection unit 40 and does not affect the imaging effect of the optical system.

In another embodiment, as shown in FIG. 3, the optical system provided in the embodiments of the present disclosure may further include a lens 50. The lens 50 is arranged between the light-emitting source 10 and the light conversion unit 20, and may correct the light emitted by the light-emitting source 10, thereby eliminating the aberration and therefore further improving the display effect of the near-eye display device. During application, a quantity of lenses 50 may be set according to an actual need. For example, there may be one or more lenses 50. This is not specifically limited herein.

It should be noted that, as shown in FIG. 2 and FIG. 3, black dots indicate that vibration directions are perpendicular to a paper surface, and rotation arrows indicate rotation directions of light.

The embodiments of this specification further provide a near-eye display device, including the optical system provided in the foregoing one or more embodiments.

It may be understood that in the embodiments of this specification, the near-eye display device may be an augmented reality device, a virtual reality (Virtual Reality, VR) device, or another near-eye display device, which is not specifically limited herein.

It should be noted that the term "comprise", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses.

Through the descriptions of the foregoing implementations, a person skilled in the art may clearly understand that the methods in the foregoing embodiments may be implemented by using software and a necessary general hardware platform, and optionally, may also be implemented by using hardware, but in many cases, the former manner is a better implementation. Based on such an understanding, the technical solutions of the present disclosure essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of the present disclosure.

The embodiments of the present disclosure are described above with reference to the accompanying drawings. However, the present disclosure is not limited to the foregoing specific implementations. The foregoing specific implementations are illustrative instead of limitative. Enlightened by the present disclosure, a person of ordinary skill in the art can make many forms without departing from the idea of the present disclosure and the scope of protection of the claims. All of the forms fall within the protection of the present disclosure.

## Claims

1. An optical system, comprising a light-emitting source (10), a light conversion unit (20), and a first reflection unit (30), the light conversion unit (20) is on a light-exiting surface side of the light-emitting source (10), and a first surface (20a) of the light conversion unit (20) faces a light-exiting surface (10a) of the light-emitting source (10); and
the first reflection unit (30) is on a side of the light conversion unit (20) away from the light-emitting source (10), and an angle between a second surface (30a) of the first reflection unit (30) and the first surface is a first angle,
wherein a first light emitted by the light-emitting source (10) is converted by the light conversion unit (20) into a second light, and the second light is reflected by the first reflection unit (10);
**characterised in that** the light conversion unit (20) comprises an absorptive polarizer (21) and a first phase retarder (22), the absorptive polarizer (21) comprises the first surface (20a), and the first phase retarder (22) is on a side of the absorptive polarizer (21) away from the light-emitting source (10) wherein the light emitting source (19) and the light conversion unit (20) are spaced apart.

2. The optical system according to claim 1, wherein a second angle is provided between a transmission axis of the absorptive polarizer and an optical axis of the first phase retarder.

3. The optical system according to claim 1, wherein the first reflection unit (30) comprises a reflective polarizer (31) and a second phase retarder (32), the second phase retarder (32) comprises the second surface (30a), the second surface (30a) faces the light conversion unit (20), the reflective polarizer (31) is on a side of the second phase retarder (32) away from the light conversion unit (20), and a vibration direction of the reflective polarizer (31) is orthogonal to a vibration direction of the absorptive polarizer (21),
wherein the second light is converted by the second phase retarder (32) into a third light, the third light is reflected by the reflective polarizer (31) to the second phase retarder (32) and converted by the second phase retarder (32) into a fourth light to be transmitted to the first phase retarder (22), then the fourth light is converted by the first phase retarder (22) into a fifth light, and the fifth light is absorbed by the absorptive polarizer (21).

4. The optical system according to claim 3, wherein the first light is natural light, the second light is circularly polarized light, the third light is linearly polarized light, the fourth light is circularly polarized light, and the fifth light is linearly polarized light;
wherein a vibration direction of the third light is orthogonal to a vibration direction of the fifth light.

5. The optical system according to claim 3, wherein the first phase retarder (22) and the second phase retarder (32) are quarter-wave plates.

6. The optical system according to claim 3, wherein a third angle is provided between an optical axis of the second phase retarder (32) and a transmission axis of the reflective polarizer (31).

7. The optical system according to any one of claims 1 to 6, wherein the optical system further comprises a second reflection unit (40), the second reflection unit (40) is on the side of the light conversion unit (20) away from the light-emitting source (10), and a reflecting surface (40a) of the second reflection unit (40) faces the second surface (30a) of the first reflection unit (30),
wherein a sixth light emitted by the light-emitting source (10) is converted by the light conversion unit (20) into a seventh light, the seventh light is transmitted to the first reflection unit (30) and converted by the first reflection unit (30) into an eighth light to be reflected to the second reflection unit (40), and the eighth light is then reflected by the second reflection unit (40) to the first reflection unit (30) and converted by the first reflection unit (30) into a ninth light to pass through the first reflection unit (30).

8. The optical system according to claim 7, wherein the second reflection unit (40) comprises a curved lens, a surface of the curved lens facing the first reflection unit (30) is a plane, and a surface of the curved lens away from the first reflection unit is a curved surface (40a).

9. The optical system according to any one of claims 1 to 6, wherein the first angle is not less than 30 degrees and not greater than 60 degrees.

10. The optical system according to any one of claims 1 to 6, wherein the optical system further comprises a lens (50), and the lens (50) is arranged between the light-emitting source (10) and the light conversion unit (20).

11. A near-eye display device, **characterized in that**, comprising the optical system according to any one of claims 1 to 10.

## Patentansprüche

1. Optisches System, umfassend eine lichtemittierende Quelle (10), eine Lichtumwandlungseinheit (20) und eine erste Reflexionseinheit (30), wobei sich die Lichtumwandlungseinheit (20) auf einer Lichtaustrittsflächenseite der lichtemittierenden Quelle (10) befindet, und eine erste Oberfläche (20a) der Lichtumwandlungseinheit (20) einer Lichtaustrittsfläche (l0a) der lichtemittierenden Quelle (10) gegenübersteht; und
wobei sich die erste Reflexionseinheit (30) auf einer Seite der Lichtumwandlungseinheit (20) von der lichtemittierenden Quelle (10) entfernt befindet, und ein Winkel zwischen einer zweiten Oberfläche (30a) der ersten Reflexionseinheit (30) und der ersten Oberfläche ein erster Winkel ist,
wobei ein erstes Licht, das von der lichtemittierenden Quelle (10) emittiert wird, durch die Lichtumwandlungseinheit (20) in ein zweites Licht umgewandelt wird, und das zweite Licht von der ersten Reflexionseinheit (10) reflektiert wird;
**dadurch gekennzeichnet, dass**
die Lichtumwandlungseinheit (20) einen absorbierenden Polarisator (21) und einen ersten Phasenverzögerer (22) umfasst, der absorbierende Polarisator (21) die erste Oberfläche (20a) umfasst, und sich der erste Phasenverzögerer (22) auf einer Seite des absorbierenden Polarisators (21) von der lichtemittierenden Quelle (10) entfernt befindet, wobei die lichtemittierende Quelle (19) und die Lichtumwandlungseinheit (20) beabstandet sind.

2. Optisches System nach Anspruch 1, wobei ein zweiter Winkel zwischen einer Durchlassachse des absorbierenden Polarisators und einer optischen Achse des ersten Phasenverzögerers bereitgestellt wird.

3. Optisches System nach Anspruch 1, wobei die erste Reflexionseinheit (30) einen reflektierenden Polarisator (31) und einen zweiten Phasenverzögerer (32) umfasst, der zweite Phasenverzögerer (32) die zweite Oberfläche (30a) umfasst, die zweite Oberfläche (30a) der Lichtumwandlungseinheit (20) gegenübersteht, sich der reflektierende Polarisator (31) auf einer Seite des zweiten Phasenverzögerers (32) von der Lichtumwandlungseinheit (20) entfernt befindet, und eine Vibrationsrichtung des reflektierenden Polarisators (31) zu einer Vibrationsrichtung des absorbierenden Polarisators (21) orthogonal ist,
wobei das zweite Licht von dem zweiten Phasenverzögerer (32) in ein drittes Licht umgewandelt wird, das dritte Licht von dem reflektierenden Polarisator (31) auf den zweiten Phasenverzögerer (32) reflektiert und von dem zweiten Phasenverzögerer (32) in ein viertes Licht umgewandelt wird, das zu dem ersten Phasenverzögerer (22) durchzulassen ist, dass das vierte Licht von dem ersten Phasenverzögerer (22) in ein fünftes Licht umgewandelt wird, und das fünfte Licht von dem absorbierenden Polarisator (21) absorbiert wird.

4. Optisches System nach Anspruch 3, wobei das erste Licht natürliches Licht ist, das zweite Licht zirkular polarisiertes Licht ist, das dritte Licht linear polarisiertes Licht ist, das vierte Licht zirkular polarisiertes Licht ist, und das fünfte Licht linear polarisiertes Licht ist;
wobei eine Vibrationsrichtung des dritten Lichts zu einer Vibrationsrichtung des fünften Lichts orthogonal ist.

5. Optisches System nach Anspruch 3, wobei der erste Phasenverzögerer (22) und der zweite Phasenverzögerer (32) Viertelwellenlängenplättchen sind.

6. Optisches System nach Anspruch 3, wobei ein dritter Winkel zwischen einer optischen Achse des zweiten Phasenverzögerers (32) und einer Durchlassachse der reflektierenden Polarisators (31) bereitgestellt wird.

7. Optisches System nach einem der Ansprüche 1 bis 6, wobei das optische System ferner eine zweite Reflexionseinheit (40) umfasst, sich die zweite Reflexionseinheit (40) auf der Seite der Lichtumwandlungseinheit (20) von der lichtemittierenden Quelle (10) entfernt befindet, und eine reflektierende Oberfläche (40a) der zweiten Reflexionseinheit (40) der zweiten Oberfläche (30a) der ersten Reflexionseinheit (30) gegenübersteht,
wobei ein sechstes Licht, das von der lichtemittierenden Quelle (10) emittiert wird, von der Lichtumwandlungseinheit (20) in ein siebtes Licht umgewandelt wird, das siebte Licht zu der ersten Reflexionseinheit (30) durchgelassen und von der ersten Reflexionseinheit (30) in ein achtes Licht umgewandelt wird, um auf die zweite Reflexionseinheit (40) reflektiert zu werden, und das achte Licht dann von der zweiten Reflexionseinheit (40) auf die erste Reflexionseinheit (30) reflektiert und von der ersten Reflexionseinheit (30) in ein neuntes Licht umgewandelt wird, um durch die erste Reflexionseinheit (30) hindurch zu gehen.

8. Optisches System nach Anspruch 7, wobei die zweite Reflexionseinheit (40) eine gekrümmte Linse umfasst, wobei eine Oberfläche der gekrümmten Linse, die der ersten Reflexionseinheit (30) gegenübersteht, eine Ebene ist, und eine Oberfläche der gekrümmten Linse von der ersten Reflexionseinheit entfernt eine gekrümmte Oberfläche (40a) ist.

9. Optisches System nach einem der Ansprüche 1 bis 6, wobei der erste Winkel nicht kleiner als 30 Grad und nicht größer als 60 Grad ist.

10. Optisches System nach einem der Ansprüche 1 bis 6, wobei das optische System ferner eine Linse (50) umfasst, und die Linse (50) zwischen der lichtemittierenden Quelle (10) und der Lichtumwandlungseinheit (20) angeordnet ist.

11. Augennahe Anzeigevorrichtung, **dadurch gekennzeichnet, dass** sie das optische System nach einem der Ansprüche 1 bis 10 umfasst.

## Revendications

1. Système optique, comprenant une source d'émission de lumière (10), une unité de conversion de lumière (20) et une première unité de réflexion (30), l'unité de conversion de lumière (20) se trouvant du côté d'une surface de sortie de lumière de la source d'émission de lumière (10), et une première surface (20a) de l'unité de conversion de lumière (20) faisant face à une surface de sortie de lumière (10a) de la source d'émission de lumière (10) ; et
la première unité de réflexion (30) se trouve sur un côté de l'unité de conversion de lumière (20) distant de la source d'émission de lumière (10), et un angle entre une deuxième surface (30a) de la première unité de réflexion (30) et la première surface est un premier angle,
dans lequel une première lumière émise par la source d'émission de lumière (10) est convertie par l'unité de conversion de lumière (20) en une deuxième lumière, et la deuxième lumière est réfléchie par la première unité de réflexion (10) ;
**caractérisé en ce que**
l'unité de conversion de lumière (20) comprend un polariseur absorptif (21) et un premier retardateur de phase (22), le polariseur absorptif (21) comprend la première surface (20a), et le premier retardateur de phase (22) se trouve sur un côté du polariseur absorptif (21) distant de la source d'émission de lumière (10), dans lequel la source d'émission de lumière (19) et l'unité de conversion de lumière (20) sont espacées l'une de l'autre.

2. Système optique selon la revendication 1, dans lequel un deuxième angle est prévu entre un axe de transmission du polariseur absorptif et un axe optique du premier retardateur de phase.

3. Système optique selon la revendication 1, dans lequel la première unité de réflexion (30) comprend un polariseur réflectif (31) et un deuxième retardateur de phase (32), le deuxième retardateur de phase (32) comprend la deuxième surface (30a), la deuxième surface (30a) fait face à l'unité de conversion de lumière (20), le polariseur réflectif (31) se trouve sur un côté du deuxième retardateur de phase (32) distant de l'unité de conversion de lumière (20), et une direction de vibration du polariseur réflectif (31) est orthogonale par rapport à une direction de vibration du polariseur absorptif (21),
dans lequel la deuxième lumière est convertie par le deuxième retardateur de phase (32) en une troisième lumière, la troisième lumière est réfléchie par le polariseur réflectif (31) vers le deuxième retardateur de phase (32) et convertie par le deuxième retardateur de phase (32) en une quatrième lumière à transmettre au premier retardateur de phase (22), puis la quatrième lumière est convertie par le premier retardateur de phase (22) en une cinquième lumière, et la cinquième lumière est absorbée par le polariseur absorptif (21).

4. Système optique selon la revendication 3, dans lequel la première lumière est une lumière naturelle, la deuxième lumière est une lumière polarisée de manière circulaire, la troisième lumière est une lumière polarisée de manière linéaire, la quatrième lumière est une lumière polarisée de manière circulaire, et la cinquième lumière est une lumière polarisée de manière linéaire ;
dans lequel une direction de vibration de la troisième lumière est orthogonale par rapport à une direction de vibration de la cinquième lumière.

5. Système optique selon la revendication 3, dans lequel le premier retardateur de phase (22) et le deuxième retardateur de phase (32) sont des plaques à quart d'onde.

6. Système optique selon la revendication 3, dans lequel un troisième angle est prévu entre un axe optique du deuxième retardateur de phase (32) et un axe de transmission du polariseur réflectif (31).

7. Système optique selon l'une quelconque des revendications 1 à 6, dans lequel le système optique comprend en outre une deuxième unité de réflexion (40), la deuxième unité de réflexion (40) se trouve sur le côté de l'unité de conversion de lumière (20) distant de la source d'émission de lumière (10), et une surface réfléchissante (40a) de la deuxième unité de réflexion (40) fait face à la deuxième surface (30a) de la première unité de réflexion (30),
dans lequel une sixième lumière émise par la source d'émission de lumière (10) est convertie par l'unité de conversion de lumière (20) en une septième lumière, la septième lumière est transmise à la première unité de réflexion (30) et convertie par la première unité de réflexion (30) en une huitième lumière à réfléchir vers la deuxième unité de réflexion (40), et la huitième lumière est ensuite réfléchie par la deuxième unité de réflexion (40) vers la première unité de réflexion (30) et convertie par la première unité de réflexion (30) en une neuvième lumière destinée à passer à travers la première unité de réflexion (30).

8. Système optique selon la revendication 7, dans lequel la deuxième unité de réflexion (40) comprend une lentille incurvée, une surface de la lentille incurvée faisant face à la première unité de réflexion (30) est un plan, et une surface de la lentille incurvée distante de la première unité de réflexion est une surface incurvée (40a).

9. Système optique selon l'une quelconque des revendications 1 à 6, dans lequel le premier angle n'est pas inférieur à 30 degrés et n'est pas supérieur à 60 degrés.

10. Système optique selon l'une quelconque des revendications 1 à 6, dans lequel le système optique comprend en outre une lentille (50), et la lentille (50) est prévue entre la source d'émission de lumière (10) et l'unité de conversion de lumière (20).

11. Dispositif d'affichage proche de l'œil, **caractérisé en ce qu'**il comprend le système optique selon l'une quelconque des revendications 1 à 10.
